Europäisches Patentamt

European Patent Office

Office européen des brevets

(11) Numéro de publication : **0 518 797 A1**

(19)

# (12) DEMANDE DE BREVET EUROPEEN

(21) Numéro de dépôt : **92460016.6**

(22) Date de dépôt : **12.06.92**

(51) Int. Cl.⁵ : **G06F 15/26**

(30) Priorité : **12.06.91 FR 9107489**

(43) Date de publication de la demande :
**16.12.92 Bulletin 92/51**

(84) Etats contractants désignés :
**DE ES GB IT**

(71) Demandeur : **Poirier, Jean-Claude**
**La Gravelle, BP 7**
**F-22690 Pleudihen-Sur-Rance (FR)**

(72) Inventeur : **Poirier, Jean-Claude**
**La Gravelle, BP 7**
**F-22690 Pleudihen-Sur-Rance (FR)**

(74) Mandataire : **Le Guen, Louis François**
**CABINET Louis LE GUEN 38, rue Levavasseur**
**B.P. 91**
**F-35802 Dinard Cédex (FR)**

(54) **Borne multiservice.**

(57)    La borne multiservice comprend un système de traitement d'informations installé dans un lieu tel qu'il soit accessible au public. Le système de traitement d'informations comprend une unité centrale (1) à laquelle est relié un dispositif d'affichage (2). Il comprend un dispositif d'entrée/sortie de données (7), une mémoire (5) dont l'espace de mémorisation est divisé en une pluralité de zones 5i et une zone de stockage temporaire 5st. Il a un dispositif de lecture (3) de carte (4) du type carte à mémoire, cette carte ayant une mémoire dans laquelle est stocké un mot d'identification qui, à l'introduction de la carte (4) dans le dispositif de lecture (3), permet d'activer une des zones (5i) de la mémoire (5) en vue de faire éxécuter par l'unité centrale (1) un programme déterminé stocké dans cette zone (5i). Ce programme permet l'affichage d'informations sur l'écran du dispositif d'affichage (2).

FIG.1

EP 0 518 797 A1

La présente invention concerne une borne multiservice qui est équipée d'un système de traitement d'informations installé dans un lieu tel qu'il soit accessible au public.

On connaît déjà des bornes destinées à renseigner le public sur telle ou telle information. Elles sont en général constituées d'un dispositif d'entrée/sortie tel qu'un clavier ou un écran tactile et d'un dispositif d'affichage, par exemple, du type ayant un écran à tube à rayons cathodiques. Ces bornes permettent d'obtenir des informations spécialisées, telles que, par exemple, des horaires de train ou d'avions, des informations sur les services rendus par tel organisme, etc.

On a cherché à réaliser une telle borne mais dont les informations qu'elle peut délivrer soient d'ordre divers. Ainsi, on a cherché à réaliser une borne avec laquelle il est possible d'obtenir des informations dont l'origine peut être locale, c'est-à-dire communale ou de l'arrondissement, mais aussi régionale et nationale.

On a également cherché à réaliser une borne qui permette de rendre des services aussi variés que possible, étant entendu que ces services se traduisent en général par des échanges d'informations, au sens large du terme, entre prestataire et demandeur de service.

Plusieurs problèmes techniques sont à résoudre dès lors qu'on propose un matériel destiné à être utilisé par un large éventail de public. Un premier trouve sa solution dans le choix de dispositifs robustes et ne constitue pas directement l'objet de l'invention, bien que la mise en oeuvre d'une technologie particulière plutôt qu'une autre évite d'avoir à choisir un matériel fragile. Un second problème est celui de pouvoir mettre en oeuvre des procédures d'interrogation, d'identification, etc... qui soient les plus simples possibles.

La présente invention concerne donc une borne multiservice qui permet de résoudre les problèmes soulevés ci-dessus.

A cet effet, une borne multiservice selon l'invention a pour caractéristique essentielle le fait que ledit système de traitement d'informations comprend une unité centrale à laquelle est relié un dispositif d'affichage, un dispositif d'entrée/sortie de données, une mémoire dont l'espace de mémorisation est divisé en une pluralité de zones et une zone de stockage temporaire, un dispositif de lecture de carte du type carte à mémoire, ladite carte ayant une mémoire dans laquelle est stocké un mot d'identification qui, à l'introduction de la carte dans le dispositif de lecture, permet d'activer une des zones de la mémoire en vue de faire exécuter par ladite unité centrale un ou des programmes déterminés stockés dans ladite zone, ce ou ces programmes permettant au moins l'affichage d'informations données sur l'écran du dispositif d'affichage.

Selon une autre caractéristique de l'invention, les cartes qui peuvent être utilisées avec ledit système de traitement d'informations, a une mémoire qui contient, sous forme de données, d'autres informations que le seul mot d'identification, ces informations pouvant être, sous la commande de l'unité centrale pilotées par un programme stocké dans la zone activée de la mémoire, stockées dans ladite mémoire, ou au contraire reçues de ladite mémoire en vue de leur mémorisation dans la mémoire de la carte.

Selon une autre caractéristique de l'invention, ledit système de traitement d'informations comprend au moins un modem relié, d'une part, à l'unité centrale et, d'autre part, à une ligne d'un réseau de télécommunication.

Selon une autre caractéristique de l'invention, ledit système de traitement d'informations comprend une mémoire reliée à l'unité centrale dans laquelle sont stockés des programmes de gestion du fonctionnement du ou des modems.

Selon une autre caractéristique de l'invention, ledit système de traitement d'informations comprend un dispositif de lecture/écriture de cartes du type bancaire.

Selon une autre caractéristique de l'invention, ledit système de traitement d'informations est équipé en outre d'au moins un appareil périphérique de saisie d'informations et/ou de reproduction d'informations, tel qu'une imprimante, un dispositif d'analyse d'images, un dispositif de crayon optique, etc...

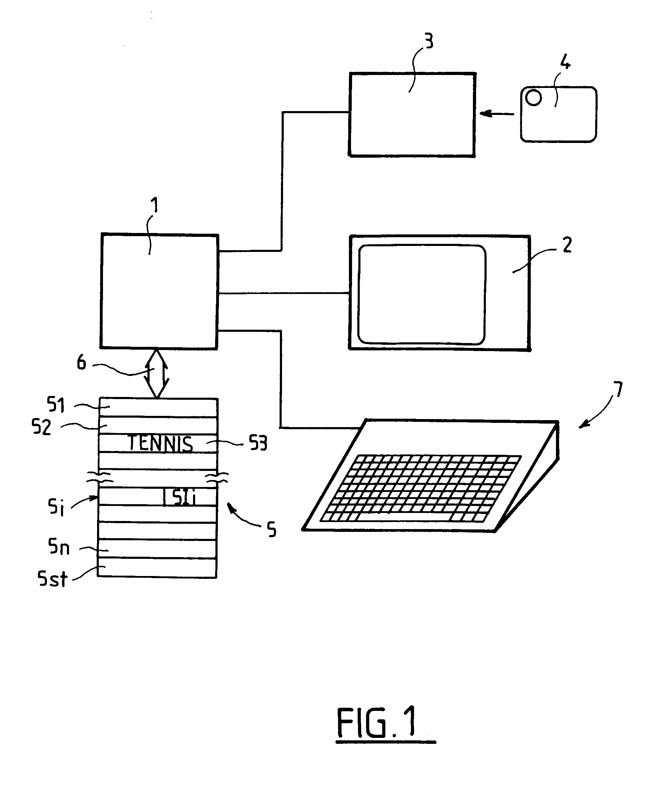

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, les Figs. 1 à 3 montrant trois modes de réalisation du système de traitement d'informations équipant une borne multiservice selon l'invention.

Une borne multiservice selon la présente invention est équipée d'un système de traitement d'informations tel que celui qui est représenté à la Fig. 1. Il comporte une unité centrale 1, un dispositif d'affichage 2 ayant un écran du type tube à rayons cathodiques ou équivalent relié à un port d'entrée/sortie de l'unité centrale 1, un dispositif de lecture 3 de carte 4 du type carte à mémoire, relié également à un port d'entrée/sortie de l'unité centrale 1 et une unité de mémoire de masse 5 reliée à l'unité centrale 1, par exemple, par un bus 6.

Il comprend encore un dispositif d'entrée/sortie de données 7, relié à un port d'entrée/sortie de l'unité centrale 1. Le dispositif 7 peut être un clavier ou un dispositif tactile monté sur la face frontale de l'écran du dispositif d'affichage 2.

L'unité de mémoire de masse 5 a son espace de mémorisation qui est divisé en une pluralité de zones 5i (51, 52, ..., 5n) et une zone de stockage temporaire 5st. Dans chacune d'elles, sont stockés, sous forme appropriée, des programmes de commande exécutables par l'unité centrale 1, des informations destinées à être affichées sous forme d'une suite de pages sur l'écran du dispositif d'affichage 2 et des données destinées à la gestion de l'affichage de ces informations. Le contenu de chaque zone 5i est propre à la zone considérée.

Les cartes 4 pouvant être utilisées avec le système de l'invention sont pourvues d'une mémoire dans les cases de laquelle est stocké un identifiant de la carte considérée. Par exemple, s'il s'agit d'une carte de service concernant un club de tennis local, sa mémoire peut contenir, dans ses cases, une information du type "TENNIS". S'il s'agit d'une carte concernant une administration locale, régionale ou nationale, l'identifiant peut être son nom et le nom de sa zone d'influence.

Chaque zone 5i de la mémoire de masse 5 correspond à un identifiant d'une carte existante. Comme on peut le voir sur la Fig. 1, la mémoire 5 comporte une zone 53 libellée "TENNIS" correspondant à une carte 4 dont l'identifiant est également "TENNIS".

Le fonctionnement du système de la Fig. 1 est le suivant. Après l'introduction d'une carte 4 dans le dispositif de lecture 3, celui-ci lit l'identifiant contenu dans les cases de la mémoire de la carte et le transmet à l'unité centrale 1.

Celle-ci active alors la zone 5i correspondante de la mémoire 5 en exécutant le ou les programmes de commande contenus dans cette zone et en affichant, sur l'écran du dispositif d'affichage 2, les informations que contient cette zone. Ces informations peuvent être affichées sous forme de pages d'écran successives. Entre deux pages successives, l'unité centrale 1 peut, par exemple, être en attente d'un signal délivré par le dispositif d'entrée/sortie 7. Ce signal sera délivré lors d'une action de l'utilisateur sur le dispositif 7, action par laquelle il aura effectué un choix parmi plusieurs options présentées dans la page d'écran sous forme, par exemple, d'un menu.

La mémoire d'une carte 4 qui peut être utilisée avec la borne de l'invention peut encore contenir des informations autres que son seul identifiant. Le programme qui est activé par une telle carte peut être prévu pour lire et traiter ces informations en vue de leur affichage sur l'écran 2 ou de leur stockage dans une sous-zone 5li de la zone 5i activée ou encore dans la zone de stockage temporaire 5st. Ces informations stockées peuvent alors être utilisées pour une demande de service ultérieure, ceci selon une procédure prévue dans le programme stocké dans la zone 5i alors activée. Par exemple, le programme contenu dans la zone 5i ultérieurement activée par une carte 4 introduite dans le dispositif 3 peut être prévu pour transférer les informations préalablement stockées dans la zone 5li ou dans la zone de stockage temporaire 5st de la mémoire 5 vers la mémoire de la carte 4.

Du fait que le système de traitement d'informations ne peut pas se trouver en communication avec l'extérieur, le type de borne qu'il équipe est avant tout une borne qui délivre des informations locales.

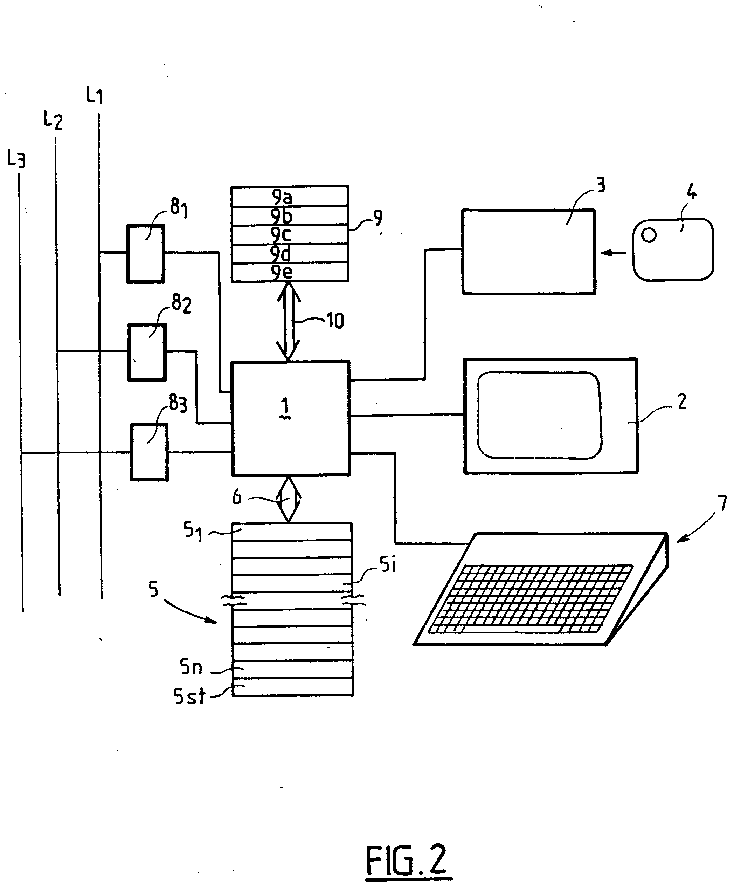

Le système représenté à la Fig. 2 comprend en plus, par rapport à celui de la Fig. 1, une pluralité de modems $8_1$, $8_2$ et $8_3$ respectivement reliés, d'une part, aux ports d'entrée/sortie correspondants de l'unité centrale 1 et, d'autre part, aux lignes $L_1$ à $L_3$ qui sont, par exemple, du type téléphonique ou appartenant à un réseau du type RNIS, ou autre.

Il comprend également une mémoire 9 reliée à l'unité de commande 1 au moyen d'un bus 10.

Avec un tel système, une carte de service 4 appropriée peut déclencher un processus tel que celui qui est décrit précédemment en activant une zone 5i de la mémoire 5. L'unité centrale 1 exécute alors les programmes contenus dans cette zone 5i activée et aussi un ou des programmes de gestion des modems $8_1$ à $8_3$ et des communications qui transitent par eux. Ces programmes sont stockés dans une zone 9a de la mémoire 9. Au moyen de ces programmes, l'unité de commande 1 effectue la numérotation nécessaire pour atteindre le serveur de données et gère la transmission des données émises par la borne et par le serveur. Ainsi, il est possible d'avoir accès à des services éloignés, tels que ceux qui sont offerts aux utilisateurs du minitel$^R$, mais aussi à d'autres réseaux.

L'unité 1 peut également répondre à un appel venu de l'extérieur en prenant la ligne correspondante. Le correspondant envoie dans un premier temps une série de données qui activent une des zones 5i de la mémoire 5. Ainsi l'unité 1 peut stocker, par exemple, dans la sous-zone 5li de la zone 5i activée ou dans la zone 5st de la mémoire 5, les données qui sont transmises à la borne. Mais il peut, au contraire, envoyer des données à l'appelant, ces données étant stockées soit dans la sous-zone 5li de la zone 5i activée ou dans la zone 5st de la mémoire 5. Ainsi, il est possible d'avoir accès aux services locaux offerts par une autre borne multiservice, par exemple, d'une localité voisine. L'accès à ce système par un modem 8 permet également de pouvoir effectuer la remise à jour des informations contenues dans chacune des zones 5i de la mémoire 5 à partir d'une autre borne placée dans le lieu où se trouve ladite information.

Le programme contenu dans la zone 9a de la mémoire 9 permet en outre une gestion efficace du temps d'utilisation des lignes $L_1$ à $L_3$. Par exemple, aussitôt obtenues les données du serveur auquel s'est raccordé un modem 8i via la ligne Li correspondante, le programme stocké dans la zone 9a commande ce modem 8i pour qu'il interrompt la communication avec le serveur auquel est raccordée la borne de l'invention. Ces données sont par exemple stockées dans une zone 9b de la mémoire 9 pour être affichées sur l'écran 2 et traitées par l'unité 1 en fonction de l'action de l'utilisateur sur le dispositif 7.

Elles peuvent être également stockées dans la mémoire 5st en vue d'une utilisation ultérieure.

Un programme spécial contenu dans la mémoire 9, par exemple dans une zone 9b, est prévu, en relation avec les programmes de gestion des modems $8_1$ à $8_3$ stockés dans la zone 9a, pour assurer la facturation de l'utilisation des lignes $L_1$ à $L_3$. Ce programme détermine, pour chaque modem 8i, le nombre d'unités consommées sur la ligne correspondante pendant une communication et, une fois le service rendu, vient en additionner le résultat au nombre stocké dans une case 9c de la mémoire 9. Ce nombre représente donc la quantité d'unités consommées par les modems 8i cumulées depuis une date donnée. A une date déterminée, un service central appelle téléphoniquement la borne et active, dans celle-ci un programme stocké dans une zone 5i de la mémoire. Ce programme permet de relever le nombre contenu dans la case 9c, et ce via le modem 8 et l'unité 1, pour la facturation au gestionnaire de la borne de l'invention. Puis le contenu de la case 9c est remis à zéro.

Les informations qui ont été stockées dans la sous-zone 5li ou dans la zone 5st de la mémoire peuvent être transférées, via un des modems $8_1$ à $8_3$ et une ligne $L_1$ à $L_3$ correspondante et sous l'impulsion de l'unité 1 et d'un programme stocké dans la zone 9d stocké dans la mémoire 9, à un centre éloigné de traitement de cette information. Ce transfert peut être effectué à une date où une ligne $L_1$ à $L_3$ est peu encombrée et est moins coûteux.

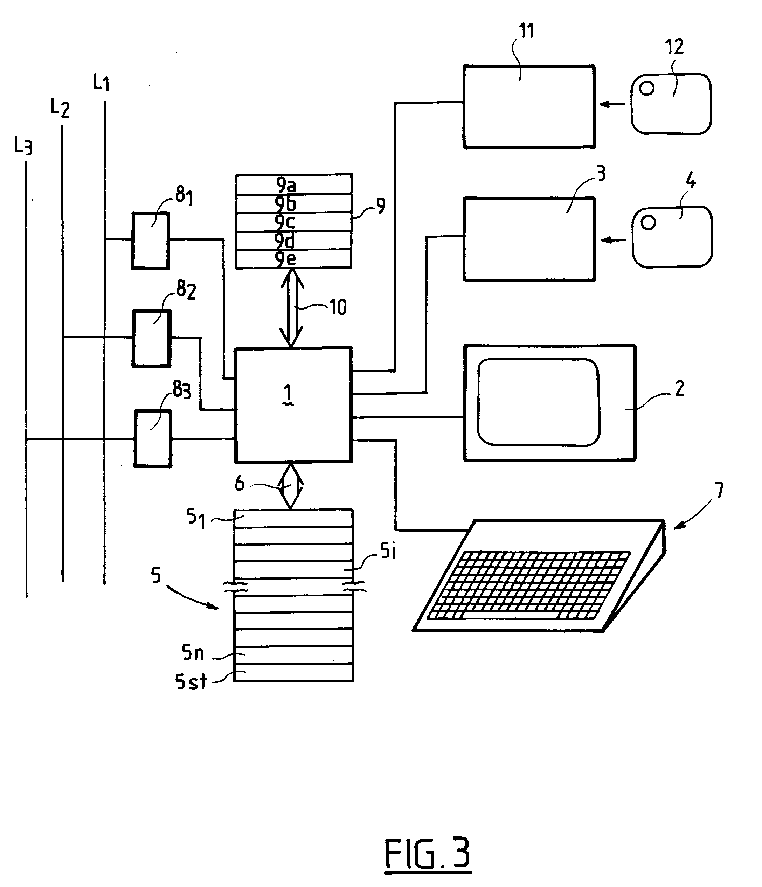

Le système de la Fig. 3 comprend en outre, par rapport à celui qui est décrit en relation avec la Fig. 2, un second dispositif d'écriture/lecture 11 de cartes 12, du type carte bancaire. L'introduction d'une carte 4 appropriée dans le dispositif de lecture 3 active la zone 5i correspondante de la mémoire 5 et l'unité centrale 1 exécute, en plus des programmes de commande stockés dans cette zone, un ou des programmes stockés dans une zone 9e de la mémoire 9. Ces programmes assurent le fonctionnement dudit dispositif 11 et, en particulier, la lecture et éventuellement l'écriture dans la mémoire de la carte 12 qui a été introduite dans le dispositif 11. Ainsi, au moyen de ce dispositif 11 et d'un des modems 8i, il est possible d'effectuer un paiement, et ce selon une procédure qui est bien connue de l'homme de métier.

Par exemple, en reprenant l'exemple de la carte de service "TENNIS", l'utilisateur peut réserver un court entre telle heure et telle heure. Il le fait au moyen du clavier 7 et en réponse à des questions posées dans la page écran affichée sur le dispositif d'affichage 2. Puis il peut payer, au moyen du second dispositif 11 et du modem 12, cette réservation.

D'autres applications du même type peuvent être mises en place.

De manière générale, lorsque le service demandé par l'utilisateur n'est pas gratuit, un programme stocké dans une sous-zone de la zone 5i activée établit, en relation avec des valeurs calculées par les programmes contenus dans la mémoire 9 et ce au fur et à mesure que le service demandé est rendu, le coût de l'opération. Le prix calculé est par exemple ensuite débité sur le compte correspondant à l'identification donnée par la carte 12 introduite dans le lecteur 11.

Les cartes 4 utilisées peuvent être du type prépayé et comporter alors une case de mémoire dans laquelle est stocké un nombre d'unités de temps d'utilisation encore disponibles pour cette carte 4. Le prix calculé précédemment peut alors être débité, en nombre d'unités, sur la carte 4 sans qu'il soit nécessaire d'introduire une carte bancaire 10. Cela peut, par exemple, être réalisé pour les faibles coûts de service.

Le système de l'invention peut également être équipé d'autres appareils périphériques reliés à l'unité centrale, tels que des imprimantes du type dit "imprimante laser" ou autre, de dispositifs d'analyse d'images, de crayons optiques, etc. Ces appareils périphériques peuvent permettre au système d'offrir d'autres services, tels que télécopie, telex, photocopie, etc. Ils sont gérés par des programmes spécialisés stockés, par exemple, dans la mémoire 9.

Il peut également être équipé d'un dispositif délivrant des tickets, relié à l'unité de commande 1, et fournissant, par exemple, un ticket de compte rendu du service rendu.

On a prévu, dans le système décrit des liaisons téléphoniques par les lignes $L_1$, $L_2$, $L_3$, mais des liaisons visiophoniques peuvent être également mises en oeuvre dans le système de l'invention.

**Revendications**

1) Borne multiservice comprenant un système de traitement d'informations installé dans un lieu tel qu'il soit accessible au public, caractérisée en ce que ledit système de traitement d'informations comprend une unité centrale (1) à laquelle est relié un dispositif d'affichage (2), un dispositif d'entrée/sortie de données (7), une mémoire (5) dont l'espace de mémorisation est divisé en une pluralité de zones 5i et une zone de stockage temporaire 5st, un dispositif de lecture (3) de carte (4) du type carte à mémoire, ladite carte ayant une mémoire dans laquelle est stocké un mot d'identification qui, à l'introduction de la carte (4) dans le dispositif de lecture (3), permet d'activer une des zones (5i) de la mémoire (5) en vue de faire exécuter par l'unité centrale (1) un programme déterminé stocké dans cette zone (5i), ce programme permettant l'affichage d'informations sur l'écran du dispositif d'affichage (2).

2) Borne selon la revendication 1, caractérisée en ce que les cartes (4) qui peuvent être utilisées avec ledit système de traitement d'informations, a une mémoire qui contient, sous forme de données, d'autres informations que le seul mot d'identification, ces informations pouvant être, sous la commande de l'unité centrale (1) pilotée par un programme stocké dans la zone activée (5i) de la mémoire 5, stockées dans la mémoire (5), ou au contraire reçues de ladite mémoire (5) en vue de leur mémorisation dans la mémoire de la carte (4).

3) Borne selon la revendication 1 ou 2, caractérisée en ce que ledit système de traitement d'informations comprend au moins un modem ($8_1$ à $8_3$) relié, d'une part, à l'unité centrale (1) et, d'autre part, à une ligne d'un réseau de télécommunication.

4) Borne selon la revendication 3, caractérisée en ce que ledit système de traitement d'informations comprend une mémoire (9) reliée à l'unité centrale (1) dans laquelle sont stockés des programmes de gestion du fonctionnement du ou des modems ($8_1$, $8_2$ et $8_3$)

5) Borne selon une des revendications précédentes, caractérisée en ce que ledit système de traitement d'informations comprend un dispositif de lecture/écriture (11) de cartes (12) du type bancaire.

6) Borne selon une des revendications précédentes, caractérisée en ce que ledit système de traitement d'informations est équipé en outre d'au moins un appareil périphérique de saisie d'informations et/ou de reproduction d'informations, tels qu'une imprimante, un dispositif d'analyse d'images, un dispositif de crayon optique, etc...

# FIG.1

<u>FIG.2</u>

FIG.3

Office européen
des brevets

**RAPPORT DE RECHERCHE EUROPEENNE**

Numero de la demande

EP    92 46 0016

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 334 290 (BLÖMACHER ET AL.)<br>* colonne 2, ligne 48 – colonne 3, ligne 54 *<br>* colonne 5, ligne 4 – ligne 11; figure * | 1,2 | G06F15/26 |
| Y | | 3-6 | |
| X | PATENT ABSTRACTS OF JAPAN<br>vol. 10, no. 116 (P-452)(2173) 30 Avril 1986<br>& JP-A-60 245 077 ( TATEISHI ) 4 Décembre 1985<br>* abrégé * | 1,2 | |
| X | DE-A-3 329 847 (WITTMAACK)<br>* page 7, ligne 12 – ligne 25 *<br>* page 8, ligne 1 – ligne 11 *<br>* page 13, ligne 20 – page 14, ligne 15; figures 1,4 * | 1,2 | |
| Y | EP-A-0 010 399 (CUBIC WESTERN DATA)<br>* page 2, ligne 1 – ligne 20 *<br>* page 5, ligne 1 – page 6, ligne 6; figures 1,2 * | 3-6 | |

**DOMAINES TECHNIQUES RECHERCHES (Int. Cl.5)**

G06F
G07F

Le présent rapport a été établi pour toutes les revendications

| Lieu de la recherche | Date d'achèvement de la recherche | Examinateur |
|---|---|---|
| LA HAYE | 16 SEPTEMBRE 1992 | NYGREN P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)